# EUROPÄISCHE PATENTSCHRIFT

(11) **EP 2 844 944 B1**
(45) Veröffentlichungstag und Bekanntmachung des Hinweises auf die Patenterteilung: **20.09.2017**
(21) Anmeldenummer: 13725061.9
(22) Anmeldetag: 30.04.2013
(51) Int. Cl.: F28F 9/02, F28D 7/16

(54) **LEITBLECH IM WÄRMETAUSCHER**
BAFFLE PLATE IN A HEAT EXCHANGER
DÉFLECTEUR INSTALLÉ DANS UN ÉCHANGEUR DE CHALEUR

(30) Priorität: 01.05.2012 US 201261641114 P; 29.01.2013 DE 102013100887
(43) Veröffentlichungstag der Anmeldung: 11.03.2015
(73) Patentinhaber: Benteler Automobiltechnik GmbH, 33102 Paderborn (DE)
(72) Erfinder: GLASS, Michael, T., Shelbyville, Michigan 49344 (US); GALDYS, Mike, Caledonia, Michigan 49316 (US)
(74) Vertreter: Griepenstroh, Jörg
(86) Internationale Anmeldenummer: PCT/EP2013/001281
(87) Internationale Veröffentlichungsnummer: WO 2013/164084

(56) Entgegenhaltungen:
- EP-A1- 0 076 928
- WO-A1-2011/132608
- DE-U1- 20 121 112
- DE-U1- 20 307 881

## Beschreibung

Die vorliegende Erfindung betrifft einen Wärmetauscher gemäß den Merkmalen im Oberbegriff von Patentanspruch 1. DE 203 07 881 offenbart einen derartiger Wärmetauscher. Aus dem Stand der Technik ist es bekannt, insbesondere in Kraftfahrzeugen Wärmetauscher einzusetzen, um Bauteile durch ein Medium zu kühlen und/oder einem Medium gezielt Wärme zu entziehen. Beispielsweise ist es somit möglich, das Kühlwasser einer Verbrennungskraftmaschine eines Kraftfahrzeuges gezielt durch ein zweites Medium, insbesondere Luft, zu kühlen. Es ist jedoch auch möglich, Abgas eines Kraftfahrzeuges zu kühlen, um beispielsweise das gekühlte Abgas selbst wiederum dem Verbrennungsprozess zuzuführen.
Aus der DE 43 43 405 A1 ist beispielsweise ein Rohrbündelwärmetauscher bekannt, bei dem an einem Ende ein Medium eingeführt wird, auf einen Rohrboden trifft und an dem Rohrboden sich sammelt und sodann durch in dem Rohrboden befindliche Wärmetauscherrohre geführt wird. Im Kreuzstromprinzip wird dann außenseitig auf einer Hülle des Wärmetauschers ein zweites Medium eingeführt, welches durch den Wärmetauscher strömt und an einer dem Eingang des zweiten Mediums gegenüberliegenden Austrittsseite den Wärmetauscher wieder verlässt.

Nachteilig hierbei ist es, dass insbesondere der Rohrboden im Falle der Verwendung eines solchen Rohrbündelwärmetauschers als Abgaswärmetauscher zumindest lokal den hohen Temperaturen des strömenden Abgases ausgesetzt ist.

Aus der DE 203 07 881 U1 ist ein Wärmetauscher als Ladeluftkühler bekannt, bei dem zwischen einer Wärmetauschereinheit und einem Luftsammelkasten ein Strömungsleitelement zur Strömungslenkung eingliedert ist.

Aus der EP 0 076 928 A1 ist ein Wärmetauscher bekannt, dessen Oberflächen eine schmutzabweisende Beschichtung aufweist.

Ferner ist aus der DE 201 21 112 U1 ein Wärmetauscher bekannt, bei dem in einem Sammelkasten Strömungsleitfinnen zur Strömungslenkung angeordnet sind.

Aufgabe der vorliegenden Erfindung ist es, die thermischen Einflüsse eines durch einen Wärmetauscher strömenden Mediums auf die Bauteilkomponenten innerhalb des Wärmetauschers zu verringern.

Die zuvor genannte Aufgabe wird erfindungsgemäß mit einem Wärmetauscher für ein Kraftfahrzeug, insbesondere mit einem Abgaswärmetauscher, gemäß den Merkmalen im Patentanspruch 1 gelöst.

Vorteilhafte Ausführungsvarianten der vorliegenden Erfindung sind Gegenstand der abhängigen Patentansprüche.

Der erfindungsgemäße Wärmetauscher für ein Kraftfahrzeug ist insbesondere als Abgaswärmetauscher ausgebildet, wobei der Wärmetauscher eine äußere Hülle aufweist und in der äußeren Hülle Wärmetauscherrohre angeordnet sind und in die Hülle stirnseitig ein Medium zuführbar und auf der gegenüberliegenden Seite abführbar ist, wobei das Medium dann durch die Wärmetauscherrohre strömt. Jeweils endseitig an der Hülle ist eine Stirnplatte angeordnet, wobei die Stirnplatte selbst Öffnungen aufweist und das Medium, welches durch die Wärmetauscherrohre strömt, zunächst durch die Öffnungen in die Wärmetauscherrohre gelangt und endseitig durch die Öffnungen wiederum aus den Wärmetauscherrohren austritt. Insbesondere sind die Öffnungen dabei von den Wärmetauscherrohren zumindest abschnittsweise durchgriffen. Erfindungsgemäß ist der Wärmetauscher dadurch gekennzeichnet, dass an der Stirnplatte randseitig zwischen den Öffnungen ebene Flächen ausgebildet sind, wobei in Strömungsrichtung vor den ebenen Flächen mittelbar oder unmittelbar Leitelemente angeordnet sind, wobei die Querspannfläche eines Leitelementes in Strömungsrichtung mindestens eine ebene Fläche überdeckt.

Im Rahmen der Erfindung ist unter der Hülle insbesondere eine äußere Hülle, ganz besonders bevorzugt eine Wärmetauscherkassette, zu verstehen, in der dann die Wärmetauscherrohre insbesondere zu einem Rohrbündel angeordnet sind. Die Hülle kann dabei bevorzugt aus einem metallischen Werkstoff ausgebildet sein, beispielsweise in Rohrbauweise oder aber auch in Blechbauweise, wobei die Hülle dann längsnahtverschweißt ist. Im Rahmen der Erfindung ist die Hülle insbesondere aus einem Stahlwerkstoff, ganz besonders bevorzugt aus einem gegenüber den korrosiven Eigenschaften des Abgases beständigen Werkstoff, ausgebildet. Im Rahmen der Erfindung ist es jedoch auch möglich, dass die Hülle aus einem Leichtmetallwerkstoff, beispielsweise Aluminium oder Ähnlichem, ausgebildet ist.

In der Hülle selbst sind dann die Wärmetauscherrohre zu einem Rohrbündel angeordnet, wobei die einzelnen Wärmetauscherrohre insbesondere durch eine die Stirnplatte, ganz besonders bevorzugt durch eine jeweils im Bereich eines Endes der Hülle angeordneten Stirnplatte, gehalten sind. Die Stirnplatten selbst sind auch als Rohrboden oder aber Rohrbund bekannt. Die Stirnplatten weisen dazu Ausnehmungen auf, wobei die Wärmetauscherrohre entweder mit den Ausnehmungen gekoppelt sind oder aber die Ausnehmungen zumindest teilweise, insbesondere vollständig, durchgreifen. Hierdurch wird es ermöglicht, dass ein Medium, welches stirnseitig in die Hülle eintritt und auch wiederum stirnseitig aus der Hülle austritt, zunächst auf die an der Eintrittsseite angeordnete Stirnplatte trifft und dann durch die Öffnungen in die Wärmetauscherrohre einströmt. Insbesondere handelt es sich dabei um Abgas, das dann durch die Wärmetauscherrohre geführt wird. Im Rahmen der Erfindung ist jedoch auch jedes andere Medium in fluidem und/oder gasförmigem Zustand durch den Wärmetauscher leitbar.

An der Stirnplatte selbst bildet sich dann durch das auf die Stirnplatte auftreffende Medium jeweils lokal eine erhöhte Temperatur, insbesondere in Form eines Hitzestaus, aus. Durch das durch die Wärmetauscherrohre strömende Abgas wird dann wiederum die Wärme mitgenommen oder aber abgeführt. Die Teile der Stirnplatte, die bei versetzt angeordneten Öffnungen im Randbereich teilweise als ebene Fläche ausgebildet sind, sind immer dem anprallenden Abgasstrom ausgesetzt und erwärmen sich daher deutlich stärker. Hierdurch kann ein thermischer Verzug der Stirnplatte stattfinden, welcher zu Undichtigkeiten des Wärmetauschers, insbesondere bei mehrjähriger intensiver Nutzung, führt. Dieses kann zum einen nur durch den Einsatz höherwertiger und vor allem dickwandiger ausgebildeten Stirnplatten kompensiert werden, was jedoch erhöhte Produktionskosten mit sich bringt. Die erfindungsgemäße Lösung sieht jedoch vor, entsprechende Leitelemente derart in Strömungsrichtung vor der Stirnplatte mittelbar, also in einem Abstand, oder aber unmittelbar, mithin annähernd direkt oder aber in direktem Kontakt mit der Stirnplatte selbst, anzuordnen, sodass das strömende Medium, insbesondere das strömende Abgas, durch die Leitelemente gezielt Richtung der Stirnplattenmitte und/oder der Öffnungen in die Wärmetauscherrohre geleitet wird und somit nicht auf die planen bzw. ebenen Flächen trifft. Hierdurch wird eine erhöhte Erwärmung der ebenen Flächen gegenüber der restlichen Stirnplatte vermieden, was insbesondere die Hitzebeständigkeit und Langlebigkeit des Wärmetauschers, bei herkömmlichen Werkstoffen und optimiertem Werkstoffeinsatz, also minimierter Wandstärke, ermöglicht. Hierdurch ist es möglich, einen temperaturresistenteren und in der Lebensdauererwartung gesteigerten Wärmetauscher auszubilden, ohne höherwertigere Werkstoffe und/oder mehr Material zum Einsatz zu bringen.

Im Rahmen der Erfindung sind die Leitelemente insbesondere als in den Innenraum des Wärmetauschers ragende Wölbungen ausgebildet. Auch können die Leitelemente im Rahmen der Erfindung als in den Innenraum des Wärmetauschers ragende Ausprägung ausgebildet sein. Mithin erheben sich die Leitelemente in Form einer Wölbung von der Innenmantelfläche der Hülle und/oder eines Flansches aus in Richtung des Innenraumes des Wärmetauschers. Ganz besonders bevorzugt weisen die Leitelemente dazu eine Spitze auf, die sich in Strömungsrichtung des Mediums dann vergrößert. Insbesondere vergrößert sich die Querspannfläche des jeweiligen Leitelementes. Die Querspannfläche vergrößert sich dabei insbesondere im Rahmen der Erfindung mit einem degressiven Verlauf. Hierdurch wird zunächst sichergestellt, dass die Spitze, welche entgegengesetzt der Strömungsrichtung des Mediums, insbesondere des Abgases ragt, mit der danach sich vergrößernden Querspannfläche des Leitelementes einen optimalen Strömungswiderstand aufweist.

Insbesondere sind die Leitelemente zumindest teilweise in Form einer Raketenspitze und/oder eines Wassertropfens, insbesondere in einer Mischform der zuvor genannten strömungsoptimierten Formen, ausgebildet. Die Leitelemente können weiterhin die Form eines konischen, zumindest halbkonischen Querschnitts, eines triangulären Prismas oder aber einen kubischen Querschnitt besitzen.

Im Rahmen der Erfindung ist es auch möglich, dass die Leitelemente als separates Bauteil in den Einströmtrichter eingesetzt sind. Beispielsweise sind die Leitelemente dann in einer Innenmantelfläche des Einströmtrichters durch thermisches Fügen gekoppelt, beispielsweise durch einen Löt- oder aber einen Schweißvorgang. Im Rahmen der Erfindung ist es ebenfalls vorstellbar, dass mehrere Leitelemente auf einem Leitelementblech beispielsweise umformtechnisch ausgebildet werden und dann das Leitelementblech in den Innenraum des Einströmtrichters eingesetzt ist und korrespondierend zu der in Strömungsrichtung dahinter liegenden Stirnplatte angeordnet wird, so dass die ebenen Flächen nicht der heißen Abgasströmung und somit einer erhöhten Wärmeentwicklung ausgesetzt sind.

Die Leitelemente sind jedoch maßgeblich sich vom Rand erstreckend in den Innenraum ausgebildet, weshalb vorgenannte Beispiele jeweils halbiert zu sehen sind. Insbesondere unter einer degressiven Zunahme der Querspannfläche ist zu verstehen, dass diese zunächst stärker zunimmt und im Anschluss daran schwächer, jedoch immer noch zunehmend ausgebildet ist.

Insbesondere ist eine in Strömungsrichtung gesehene Hinterseite des Leitelementes dann gerade abfallend, so dass nicht durch einen sich langsam wiederum an die Innenmantelfläche des Wärmetauschers annähernde Fläche ein Sogeffekt entsteht. Hierdurch würde dann der erfindungswesentliche Vorteil der Leitung des strömenden Mediums über die ebenen Flächen nicht erfolgen.

Insbesondere sind mehrere Leitelemente radial umlaufend in einem Abstand zueinander angeordnet. Ein Leitelement ist bevorzugt immer einer ebenen Fläche im Randbereich des Wärmetauschers zugeordnet bzw. vorgelagert. Der Wärmetauscher selber kann dabei im Querschnitt beispielsweise quadratisch oder aber rechteckig ausgebildet sein. Im Rahmen der Erfindung ist es jedoch auch möglich, dass der Wärmetauscher im Querschnitt rund und/oder oval ausgebildet ist, wobei dann ebenfalls im Randbereich der Stirnplatte ebene Flächen aufgrund der Öffnungen verbleiben.

Weiterhin bevorzugt ist die Hülle des Wärmetauschers mit einem Flansch gekoppelt. Bei dem Flansch kann es sich im Rahmen der Erfindung auch um einen Rohrstutzen handeln, wobei dann der Flansch bzw. Rohrstutzen mit der Hülle gekoppelt ist. Insbesondere ist der Rohrstutzen zumindest teilweise in Strömungsrichtung in die Hülle eingeschoben und/oder auf die Hülle aufgeschoben. Die Leitelemente sind dann im Rahmen der Erfindung wiederum besonders bevorzugt in dem Flansch selber angeordnet.

Zur besonders kostengünstigen Herstellung ist der Flansch insbesondere als Gussbauteil ausgebildet, wobei die Leitelemente einstückig und werkstoffeinheitlich mit dem Flansch gekoppelt sind, insbesondere bei einem als Gussbauteil ausgeführten Flansch direkt an diesen mit angegossen sind oder aber dass die Leitelemente als externe Bauteile mit dem Flansch gekoppelt sind. Bevorzugt sind die Leitelemente dann in dem Flansch eingeschweißt und/oder verlötet. Auch ist es im Rahmen der Erfindung möglich, die Leitelemente in den Flansch einzukleben. Ebenfalls ist es im Rahmen der Erfindung möglich, ein zusätzliches, an der Innenmantelfläche außen umlaufendes Rahmenbauteil einzugliedern, wobei die Leitelemente dann in dem Rahmenbauteil selbst ausgebildet sind oder aber an dem Rahmenbauteil ausgebildet sind.

Weiterhin bevorzugt ist im Rahmen der Erfindung die Innenmantelfläche des Flansches und/oder die Oberfläche der Leitelemente beschichtet. Die Beschichtung ist insbesondere eine thermisch resistente Beschichtung und/oder eine strömungsoptimierte Beschichtung. Hierdurch wird eine Lebensdauererhöhung insbesondere der Leitelemente hervorgerufen und gleichzeitig in dem Wärmetauscher insbesondere der durch die Leitelemente entstehende Gegendruck aufgrund der strömungsoptimierten Oberfläche minimiert.

Weitere Vorteile, Merkmale, Eigenschaften und Aspekte der vorliegenden Erfindung sind Gegenstand der abhängigen Patentansprüche. Bevorzugte Ausführungsvarianten werden in den schematischen Figuren dargestellt. Diese dienen dem einfachen Verständnis der Erfindung. Es zeigen:
- Figur 1a und b: eine perspektivische Schnittansicht und eine Querschnittsansicht durch einen erfindungsgemäßen Wärmetauscher,
- Figur 2: einen Längsschnitt durch einen erfindungsgemäßen Wärmetauscher mit eingesetztem Wärmetauscherrohr und
- Figur 3: eine Stirnansicht auf einen Wärmetauscher mit Stirnplatte.

In den Figuren werden für gleiche oder ähnliche Bauteile dieselben Bezugszeichen verwendet, auch wenn eine wiederholte Beschreibung aus Vereinfachungsgründen entfällt.

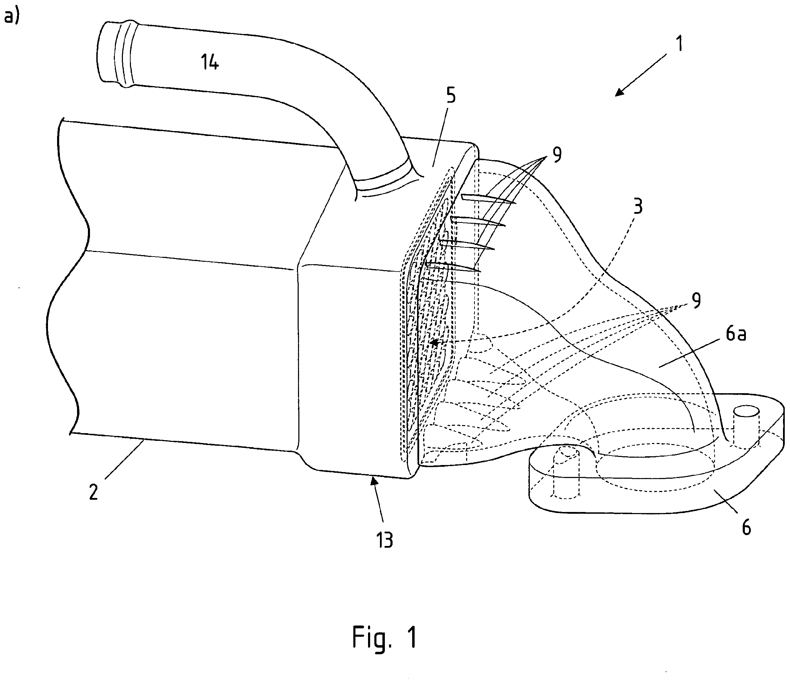

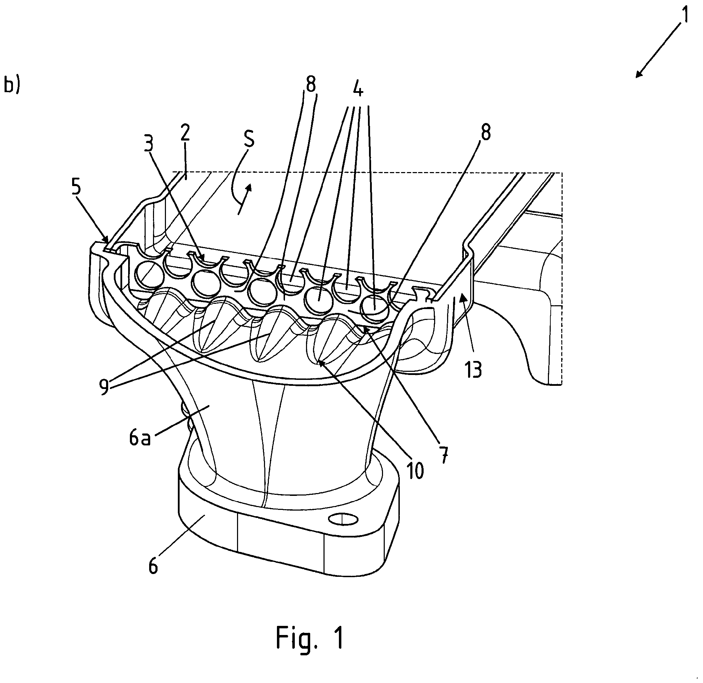

Figur 1a zeigt einen erfindungsgemäßen Wärmetauscher 1 in einer perspektivischen Teilschnittansicht. Der Wärmetauscher 1 weist dabei eine Hülle 2 mit einer eingesetzten Stirnplatte 3 auf. An einem Ende 5 der Hülle 2 ist ein Flansch 6 mit Einströmstutzen 6a vorgesehen. In dem Einströmstutzen 6a selbst sind Leitelemente 9 ausgebildet, die, wie nachfolgend in Figur 1b erläutert, in Strömungsrichtung S des Fluids den ebenen Flächen 8 vorgeschaltet sind. Die Leitelemente 9 können dabei einstückig und werkstoffeinheitlich in dem Einströmstutzen 6a selbst ausgebildet sein oder alternativ auch als externe Bauteile in dem Einströmstutzen 6a befestigt sein. Im Rahmen der Erfindung ist es auch möglich, dass die Leitelemente 9 an jeweils einer Seite des Einströmstutzens 6a von einem Leitblech ausgebildet sind oder das gesamte Leitblech in den Einströmstutzen 6a eingebracht ist.

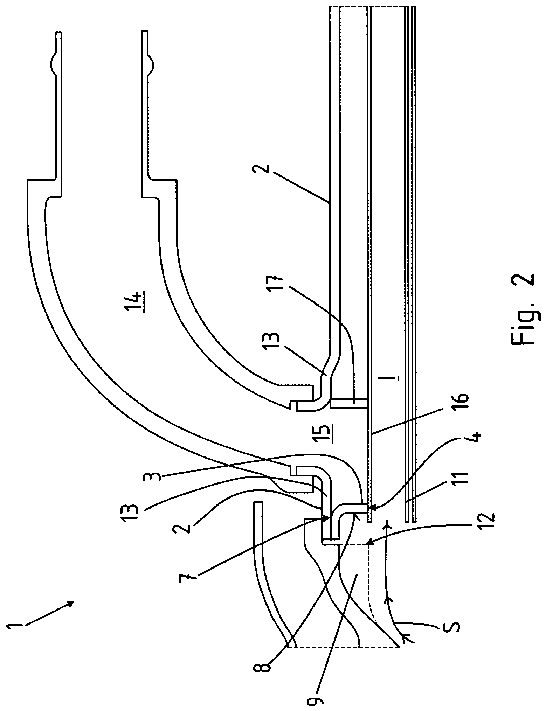

Ferner ist das Ende 5 der Hülle 2 vergrößert ausgebildet, so dass hier eine umlaufende Lippe 13 den Einströmstutzen 6a formschlüssig zumindest teilweise aufnimmt. Ferner ist an der Lippe 13 angeordnet ein Anschlussstutzen 14, der ein nicht näher dargestelltes Kühlmedium in einen gemäß Figur 2 dargestellten Kühlkanal 15 befördert, der an einer Hinterseite der Stirnplatte 3 ausgebildet ist und somit die Stirnplatte 3 zusätzlich kühlt. Die Lippe 13 und der Einströmstutzen 6a sind bevorzugt miteinander stoffschlüssig gekoppelt, insbesondere verlötet oder verschweißt.

Figur 1b zeigt eine Querschnittsansicht eines erfindungsgemäßen Wärmetauschers 1, wobei der Wärmetauscher 1 eine Hülle 2 mit eingesetzter Stirnplatte 3 aufweist. Die Stirnplatte 3 selber besitzt wiederum Öffnungen 4, wobei in die Öffnungen 4 in Figur 1 nicht näher dargestellte Wärmetauscherrohre eingesetzt werden können. Ferner dargestellt ist die Strömungsrichtung S eines durch den Wärmetauscher 1 strömenden Mediums. An einem Ende 5 der Hülle 2 ist dieser ein Flansch 6 vorgeschaltet. Durch den Flansch 6 strömt das Medium in Richtung der Hülle 2 und trifft zunächst auf die Stirnplatte 3. Hierbei strömt das Medium durch die Öffnungen 4, wobei im Randbereich 7 der Stirnplatte 3 selbst ebene Flächen 8 angeordnet sind. In Strömungsrichtung S ist den ebenen Flächen 8 jeweils ein Leitelement 9 vorgeschaltet. Das Leitelement 9 selbst weist eine Spitze 10 auf, wobei sich dann das Leitelement 9 in Strömungsrichtung S von der Spitze 10 aus vergrößert, insbesondere in Form einer in den Innenraum des Flansches 6 ragende Wölbung.

In Figur 2 ist der Wärmetauscher 1 in einem Längsschnitt gezeigt, wobei die Stirnplatte 3 am Ende der Hülle 2 angeordnet ist. Hier weist im Randbereich 7 die Stirnplatte 3 eine ebene Fläche 8 auf, wobei die Stirnplatte 3 selbst in der Öffnung 4 von einem Wärmetauscherrohr 11 durchgriffen ist. Eingezeichnet ist die Strömungsrichtung S des Mediums durch das Wärmetauscherrohr 11. Der Stirnplatte 3 in Strömungsrichtung S vorgeschaltet ist das Leitelement 9, wobei in Figur 2 gut ersichtlich ist, dass somit die Strömungsrichtung S von einem hinteren Ende 12 des Leitelementes 9 in Richtung zu dem Wärmetauscherrohr 11 strömt und hierdurch an einem Strömen vor die ebene Fläche 8 im Randbereich der Stirnplatte 3 gehindert wird. Ferner dargestellt ist ein Kühlkanal 15, der ein nicht näher dargestelltes Kühlmedium über den Anschlussstutzen 14 an die Hinterseite der Stirnplatte 3 sowie die teilweise in den Wärmetauscher 1 angeordneten Rohre 16 führt und somit insbesondere die Stirnplatte 3 kühlt. Ferner dargestellt ist eine Trennwand 17, die den Kühlkanal 15 mit berandet. Der Anschlussstutzen 14 selber kann dabei, wie hier dargestellt, formschlüssig auf die Lippe 13 aufgesetzt sein, jedoch auch einstückig und werkstoffeinheitlich mit dieser ausgebildet sein. Ebenfalls gut ersichtlich ist in Figur 2, dass die Strömungsrichtung S und mithin durch die Rohre 16 strömende Abgase nicht vor die ebene Fläche 8 stoßen und hier eine erhöhte Hitzeentwicklung entfalten würden, sondern direkt in einen Innenraum I der Rohre 16 geleitet werden.

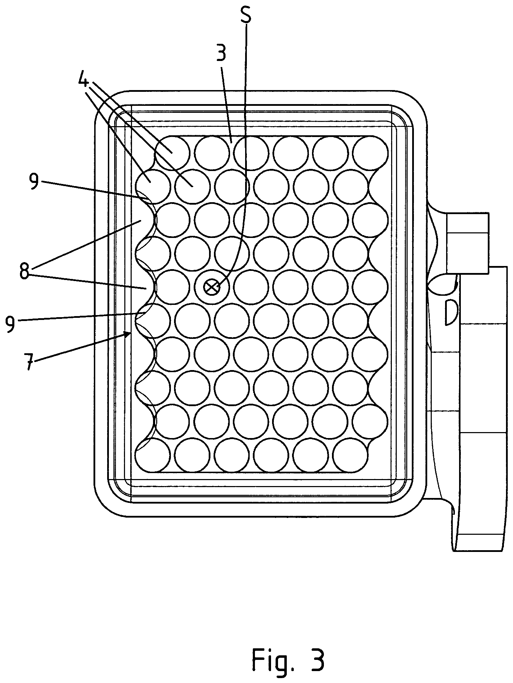

Gut zu erkennen ist dies insbesondere noch einmal in Figur 3, wobei hier die einzelnen Öffnungen 4 jeweils versetzt in der Stirnplatte 3 zu erkennen sind. In den Randbereichen 7 sind die ebenen Flächen 8 ausgebildet, die jedoch durch die jeweiligen Leitelemente 9 in Strömungsrichtung S, welche in Figur 3 in die Bildebene hinein verläuft, überdeckt wird. Die Leitelemente 9 sind dabei schematisch eingezeichnet, da diese auf die Bildebene bezogen oberhalb der Stirnplatte 3 liegen. Mithin ist die Querspannfläche des Leitelementes 9 größer als die auf die Bildebene bezogen dahinter liegende ebene Fläche 8 des Randbereiches der Stirnplatte 3, welche somit von der Querspannfläche des Leitelementes 9 überdeckt ist. Das in die Bildebene hineinströmende Abgas mit dem hineinströmenden Medium wird somit an einem Strömen, insbesondere Stauen vor den ebenen Flächen 8 des Leitelementes 9 gehindert und gezielt in die Öffnungen 4 geleitet.

### Bezugszeichen:

- 1 -: Wärmetauscher
- 2 -: Hülle
- 3 -: Stirnplatte
- 4 -: Öffnung zu 3
- 5 -: Ende zu 2
- 6 -: Flansch
- 6a -: Einströmstutzen
- 7 -: Randbereich
- 8 -: ebene Fläche
- 9 -: Leitelement
- 10 -: Spitze zu 9
- 11 -: Wärmetauscherrohr
- 12 -: hinteres Ende zu 9
- 13 -: Lippe zu 2
- 14 -: Anschlussstutzen
- 15 -: Kühlkanal
- 16 -: Rohr
- 17 -: Trennwand

- S -: Strömungsrichtung
- I -: Innenraum

## Patentansprüche

1. Wärmetauscher (1) für ein Kraftfahrzeug, insbesondere Abgaswärmetauscher, wobei der Wärmetauscher (1) eine äußere Hülle (2) aufweist und in der äußeren Hülle (2) Wärmetauscherrohre (11) angeordnet sind und in die Hülle (2) stirnseitig ein Medium zuführbar und auf der gegenüberliegenden Seite abführbar Ist, wobei endseitig in der Hülle (2) eine Stirnplatte (3) angeordnet ist, wobei die Stirnplatte (3) Öffnungen (4) aufweist, durch die das Medium In die Wärmetauscherrohre (11) überführbar ist, insbesondere sind die Öffnungen (4) von den Wärmetauscherrohren (11) zumindest abschnittsweise durchgriffen, wobei die Öffnungen (4) in der Stirnplatte (3) als kreisrunde Löcher ausgebildet sind und die Löcher versetzt zueinander angeordnet sind, wobei an der Stirnplatte (3) randseitig (7) zwischen den Öffnungen (4) ebene Flächen (8) ausgebildet sind, **dadurch gekennzeichnet, dass** in Strömungsrichtung (S) vor den ebenen Flächen (8) mittelbar oder unmittelbar Leitelemente (9) angeordnet sind, wobei die Querspannfläche der Leitelemente (9) in Strömungsrichtung (S) mindestens die ebenen Flächen (8) überdeckt.

2. Wärmetauscher nach Anspruch 1, **dadurch gekennzeichnet, dass** die Leitelemente (9) als in den Innenraum (I) des Wärmetauschers (1) ragende Wölbung ausgebildet sind.

3. Wärmetauscher nach einem der Ansprüche 1 bis 2. **dadurch gekennzeichnet, dass** die Leitelemente (9) eine Spitze (10) aufweisen und sich in Strömungsrichtung (S) des Mediums vergrößern, insbesondere vergrößert sich die Querspannfläche der Leitelemente (9).

4. Wärmetauscher nach dem vorstehenden Anspruch, **dadurch gekennzeichnet, dass** sich die Querspannfläche degressiv vergrößert.

5. Wärmetauscher nach einem der vorangehenden Ansprüche, **dadurch gekennzeichnet, dass** mehrere Leitelemente (9) radial umlaufend in einem Abstand zueinander angeordnet sind.

6. Wärmetauscher nach einem der vorangehenden Ansprüche, **dadurch gekennzeichnet, dass** ein Flansch (6) mit der Hülle (2) gekoppelt ist, wobei die Leitelemente (9) in dem Flansch (6) angeordnet sind.

7. Wärmetauscher nach dem vorstehenden Anspruch, **dadurch gekennzeichnet, dass** der Flansch (6) als Gussbauteil ausgebildet ist, wobei die Leitelemente (9) einstückig und werkstoffeinheitlich in dem Flansch (6) angeordnet sind oder dass die Leitelemente (9) als externe Bauteile in dem Flansch (6) gekoppelt sind.

8. Wärmetauscher nach einem der vorangehenden Ansprüche, **dadurch gekennzeichnet, dass** die Innenmantetfläche des Flansches (6) und/oder die Oberfläche der Leitelemente (9) beschichtet sind, insbesondere mit einer thermisch resistenten und/oder strömungsoptimierten Beschichtung.

## Claims

1. Heat exchanger (1) for a motor vehicle, in particular exhaust gas heat exchanger, wherein the heat exchanger (1) has an outer sheath (2) and heat exchanger tubes (11) are arranged in the outer sheath (2) and a medium is introducible into the sheath (2) at a front side and is dischargeable on the other side, wherein a front plate (3) is arranged in the sheath (2) at the end side, wherein the front plate (3) has openings (4) for passage of the medium into the heat exchanger tubes (11), in particular the heat exchanger tubes (11) reach through the openings (4) at least in sections, wherein the openings (4) in the front plate (3) are configured as circular holes and the holes are arranged offset to each other, wherein even surfaces (8) are formed between the openings (4) at a border (7) of the front plate (3), **characterised in that** guide elements (9) are arranged directly or indirectly upstream of the even surfaces (8) in the flow direction (S), wherein the transverse face area of the guide elements (9) covers in the flow direction (S) at least the even surfaces (8).

2. Heat exchanger according to claim 1, **characterised in that** the guide elements (9) are configured as bulge that protrudes into an inner space (I) of the heat exchanger (1).

3. Heat exchanger according to any one of claims 1 to 2, **characterised in that** the guide elements (9) have a tip (10) and increase in size in the flow direction (S) of the medium, in particular the transverse face area of the guide elements (9) increases.

4. Heat exchanger according to the preceding claim, **characterised in that** the transverse face area increases degressively.

5. Heat exchanger according to any one of the preceding claims, **characterised in that** multiple guide elements (9) are arranged spaced apart in a radially circulating manner.

6. Heat exchanger according to any one of the preceding claims, **characterised in that** a flange (6) is coupled with the sheath (2), wherein the guide elements (9) are arranged in the flange (6).

7. Heat exchanger according to the preceding claim, **characterised in that** the flange (6) is configured as a cast part, wherein the guide elements (9) are arranged in the flange (6) as a single piece and of the same material or **in that** the guide elements (9) are coupled in the flange (6) as external components.

8. Heat exchanger according to any one of the preceding claims, **characterised in that** the inner sheath surface of the flange (6) and/or the surface of the guide elements (9) is coated in particular with a thermally resistant and/or flow optimised coating.

## Revendications

1. Echangeur de chaleur (1) pour un véhicule automobile en particulier échangeur de chaleur pour gaz d'échappement, dans lequel l'échangeur de chaleur (1) présente une enveloppe (2) extérieure et des tubes échangeurs de chaleur (11) sont disposés dans l'enveloppe (2) extérieure et un milieu peut être amené côté frontal dans l'enveloppe (2) et peut être évacué sur le côté faisant face, dans lequel une plaque frontale (3) est disposée du côté d'une extrémité dans l'enveloppe (2), dans lequel la plaque frontale (3) présente des ouvertures (4), par lesquelles le milieu peut être transféré dans les tubes échangeurs de chaleur (11), en particulier les ouvertures (4) sont traversées au moins par endroits par les tubes échangeurs de chaleur (11), dans lequel les ouvertures (4) dans la plaque frontale (3) sont réalisées en tant que trous ronds circulaires et les trous sont disposés de manière décalée les uns par rapport aux autres, dans lequel des faces (8) planes sont réalisées au niveau de la plaque frontale (3) côté bord (7) entre les ouvertures (4), **caractérisé en ce que** des éléments déflecteurs (9) sont disposés directement ou indirectement dans la direction d'écoulement (S) devant les faces (8) planes, dans lequel la face de serrage transversale des éléments déflecteurs (9) recouvre dans la direction d'écoulement (S) au moins les faces (8) planes.

2. Echangeur de chaleur selon la revendication 1, **caractérisé en ce que** les éléments déflecteurs (9) sont réalisés en tant que bombement dépassant dans l'espace intérieur (I) de l'échangeur de chaleur (1).

3. Echangeur de chaleur selon l'une quelconque des revendications 1 à 2, **caractérisé en ce que** les éléments déflecteurs (9) présentent un sommet (10) et s'agrandissent dans la direction d'écoulement (S) du milieu, en particulier la face de serrage transversale des éléments déflecteurs (9) s'agrandit.

4. Echangeur de chaleur selon la revendication précédente, **caractérisé en ce que** la face de serrage transversale s'agrandit de manière dégressive.

5. Echangeur de chaleur selon l'une quelconque des revendications précédentes, **caractérisé en ce que** plusieurs éléments déflecteurs (9) sont disposés à une distance les uns des autres de manière périphérique radialement.

6. Echangeur de chaleur selon l'une quelconque des revendications précédentes, **caractérisé en ce qu'**une bride (6) est couplée à l'enveloppe (2), dans lequel les éléments déflecteurs (9) sont disposés dans la bride (6).

7. Echangeur de chaleur selon la revendication précédente, **caractérisé en ce que** la bride (6) est réalisée en tant que composant de coulée, dans lequel les éléments déflecteurs (9) sont disposés d'un seul tenant et avec une unité de matériau dans la bride (6) ou que les éléments déflecteurs (9) sont couplés en tant que composants externes dans la bride (6).

8. Echangeur de chaleur selon l'une quelconque des revendications précédentes, **caractérisé en ce que** la face enveloppante intérieure de la bride (6) et/ou la surface des éléments déflecteurs (9) sont revêtues, en particulier d'un revêtement résistant thermiquement et/ou à écoulement optimisé.
